Europäisches Patentamt

European Patent Office

Office européen des brevets

(19)

(11) Publication number : **0 547 798 A1**

# (12) EUROPEAN PATENT APPLICATION

(21) Application number : **92310915.1**

(22) Date of filing : **30.11.92**

(51) Int. Cl.⁵ : **C09J 123/08**

(30) Priority : **17.12.91 US 809005**

(43) Date of publication of application :
**23.06.93 Bulletin 93/25**

(84) Designated Contracting States :
**BE DE FR GB**

(71) Applicant : **MINNESOTA MINING AND MANUFACTURING COMPANY**
**3M Center, P.O. Box 33427**
**St. Paul, Minnesota 55133-3427 (US)**

(72) Inventor : **Hansen, Dennis D., c/o Minnesota Mining Manufact.**
**Company, 2501 Hudson Road, P.O. Box 33427**
**St. Paul, Minnesota 5133-3427 (US)**

(74) Representative : **Baillie, Iain Cameron et al**
**c/o Ladas & Parry, Altheimer Eck 2**
**W-8000 München 2 (DE)**

(54) **Hot-melt compositions based on ethylene/N-butyl acrylate copolymers which have good open time and form creep-resistant bonds when applied in thin layers.**

(57)    A hot-melt composition consisting essentially of an ethylene/n-butyl acrylate copolymer and a tackifying resin can be spread into a thin layer that remains tacky for more than 5 seconds, after which a bond can be made without applying heat or more than hand pressure. Within a short period of time, the composition crystallizes so that the bond becomes creep-resistant.

Fig. 1

SHEAR STORAGE MODULUS (G')
(DYNES/CM²)

TIME (MINUTES)

EP 0 547 798 A1

## BACKGROUND OF THE INVENTION

### Field of the Invention

This invention relates generally to hot-melt compositions and, more particularly, to hot-melt compositions based on ethylene/n-butyl acrylate (EnBA) copolymers and tackifying resins. Hot-melt compositions according to the invention have good open time and form creep-resistant bonds when applied in thin layers.

### Description of the Related Art

Hot-melt compositions are generally understood to comprise thermoplastic materials which are solid at room temperature but which readily melt to a viscous liquid upon heating. The molten composition is applied to a substrate and the substrate is mated to a second surface. As the composition cools, it rapidly solidifies and then crystallizes or "sets up" thereby forming a bond between the substrate and the second surface. Accordingly, the term "set time" has been adopted to define the time required for the hot-melt composition to crystallize and the bond between the substrate and the second surface to form after the substrate and the second surface have been mated.

"Set time" is to be distinguished from "open time" (sometimes referred to herein as "tack bonding range") which refers to the time over which the hot-melt composition remains tacky after having been applied to an unheated, room temperature (about 20° to 22°C) substrate. Once the "open time" has been exceeded, the hot-melt composition becomes tack-free and the substrate and the second surface cannot be successfully mated unless the composition is capable of being reactivated (i.e., the composition can be rendered tacky again).

Typical uses for hot-melt compositions include the high speed, automated assembly of low strength products such as in bookbinding and packaging operations. Hot-melt compositions have traditionally been applied to a substrate as a bead. When applied in bead form, presently known hot-melt compositions may offer two advantageous properties, an open time of at least 5 seconds coupled with a relatively short set time. An open time of at least 5 seconds allows ample time for mating the surfaces to be bonded while a short set time indicates that the bond has crystallized to the extent that the mated surfaces no longer need to be clamped or held together. A short set time permits bookbinding and cardboard carton assembly equipment to be operated at maximum speed.

Another characteristic demonstrated by such compositions is their ability to form "creep-resistant " bonds. "Creep resistance" refers to the capacity of a bond to sustain a constant load under a constant stress. A bond which "creeps" moves slowly when under stress. Items bonded together by an adhesive which tends to "creep" will move, may not stay in place and may even fail. A bond which is "creep-resistant" combats this tendency.

However, it is not always desirable to apply a hot-melt composition as a bead. When a bead of adhesive is deposited on a substrate and a second surface is mated thereto, the bead is compressed and spreads out between the substrate and the second surface. In some instances, the composition may be squeezed out beyond the edges of the mated surfaces creating a messy, unaesthetic appearance. Alternatively, the composition may not fully extend to the edges of the mated surfaces thereby creating a situation referred to as "edge gap" which increases the opportunity for delamination of the substrate and the second surface. In general, when a hot-melt composition is distributed between a substrate and a second surface by compressing a bead of the composition, it is difficult to obtain a layer of the composition which uniformly covers the substrate and which is of substantially equal thickness throughout. Failure to achieve such a distribution is particularly problematic when bonding relatively thin substrates since the uneven application of the hot-melt composition may be telegraphed through the substrate (i.e., the uneven application of the hot-melt composition becomes visually apparent).

The application of hot-melt compositions as beads has been associated with other undesirable occurrences. Beads may wick through the substrate, especially if the substrate is thin. Also, a bead may indelibly stain a porous substrate.

Accordingly, there is considerable need for a hot-melt composition which may be usefully applied to a substrate in a thin layer. Such a hot-melt composition would offer extraordinary advantages over hot-melt compositions which are applied as beads. For example, the composition could be uniformly applied to the entire surface of a substrate in a layer of substantially constant thickness. The likelihood that the composition would be squeezed out beyond the edges of the substrate or would not fully extend to the edges thereof would be greatly reduced. Similarly, a thin layer would be less likely to telegraph through, wick through, or permanently stain a substrate.

Presently known hot-melt compositions, when spread as a thin layer on a room temperature substrate, do crystallize to form creep-resistant bonds. Unfortunately, these compositions also exhibit a very short open time on the order of 1 to 2 seconds. While an open time of such short duration may be acceptable in certain applications, such as some high speed, automated cardboard carton sealing operations where the surfaces to be mated can be brought together within 1 to 2 seconds of the adhesive having been deposited, in other instances it is desirable to have an open time of at least 5 seconds. For example, in the construction of signs, advertising displays and other articles having a relatively large surface area (as compared to the sealing of cardboard cartons), a relatively long open time adhesive may be required so as to provide ample time in which to complete the assembly of the article while the adhesive remains tacky.

In other industries such as lithography, die cut parts and costume jewelry, the two parts which are to be adhesively bonded must be carefully and precisely positioned with respect to each other. An adhesive with an open time of at least 5 seconds provides the assembler of such components sufficient time to accurately position the bonded parts and, if necessary, to reposition them until they are properly aligned. The 1 to 2 seconds of open time afforded by presently known hot-melt adhesives when spread in a thin layer is simply too short to allow for precision placement. (The adhesive becomes nontacky before the components can be properly positioned.)

Pressure sensitive adhesives are a class of materials which are essentially permanently tacky at room temperature and may be regarded as having a virtually infinite open time. Intuitively, materials having a virtually infinite open time would appear to be well-suited to the construction of large surface area articles or precision components because of the long time during which the construction of these articles could be completed. However, such is not the case. As the open time of an adhesive increases, the opportunity for dirt and other materials to contaminate the adhesive surface is enhanced because the tacky adhesive readily retains the same. Contaminants are aesthetically displeasing, especially in articles such as costume jewelry. More importantly, contaminants deposited on the adhesive surfaces prior to bonding can weaken the ultimate strength of the bond by reducing the available surface area of the adhesive.

The virtually infinite open time of a pressure sensitive adhesive can pose long term storage and inventory management problems too. For example, the manufacture of certain articles such as signs and advertising displays may involve laminating several panels together to provide the finished article. The number and types of panels required will depend on the ultimate size of the articles, where the articles are to be placed, and customer preferences. Consequently, it may be desirable for a manufacturer of such articles to maintain an inventory of panels which have been precoated with an adhesive to facilitate the rapid assembly of the finished articles upon customer demand. However, if these panels are coated with a pressure sensitive adhesive, the essentially permanently tacky surface will readily retain dust and dirt, rendering the useful storage of precoated panels virtually impossible. Also, the precoated panels can not be conveniently stacked (unless expensive and unwieldy release liners are employed) since they will adhere to adjacent panels in the stack.

Consequently, it would be desirable for the adhesive used to precoat such panels to have a limited open time such that the panels could be readily prepared in advance and stored. Of course, the adhesive would have to be capable of being reactivated (i.e., restored to a tacky condition) so that assembly of the finished articles could be subsequently completed.

Furthermore, pressure sensitive adhesive compositions (even those which are considered hot-melt pressure sensitive adhesives) do not form creep-resistant bonds when spread in a thin layer. As noted above, items bonded together by an adhesive which tends to creep will move, may not stay in place, and may even fail. In the bonding of precision components, a creep-resistant adhesive helps prevent movement which would otherwise disturb the accurate positioning of the components.

Thus, it would be desirable for a hot-melt composition when spread in a thin layer to have a limited open time; that is, an open time greater than about 5 seconds (so as to exceed conventional hot-melt compositions) but which is not virtually infinite (so as to decrease the opportunity for dirt contamination as happens with conventional pressure sensitive adhesives).

Hot-melt compositions are often applied with dispensers commonly referred to as "glue guns." In these devices, the composition is provided in the form of a relatively hard, rigid stick or rod which is pneumatically or mechanically driven into an electrically heated well or chamber at the rear of the device. Most presently known compositions require that the well be heated to a temperature of at least about 350° to 400°F (177° to 204°C) to melt the composition and to reduce its viscosity. The molten composition is forced through a barrel-like portion of the device and exits from the opposite end thereof to be applied to a substrate. The temperature of the molten composition upon discharge is typically about 330° to 380°F (166° to 193°C).

Hot-melt compositions which must be applied at a temperature of about 350° to 400°F (177° to 204°C) pose unique problems whether deposited as a bead or a thin film. For example, at these temperatures, a negligent user of the hot-melt composition may be seriously burned by contact with the same. Also, such compositions cannot be used in conjunction with relatively heat sensitive substrates (e.g., expanded polystyrene) as the same may melt. Furthermore, such hot-melt compositions can be more difficult to apply. Because of the relatively high melting temperatures, a large power supply is needed to heat the glue gun chamber so as to melt the adhesive rod, thereby limiting the ability to use a portable power supply (such as batteries, for example). Similarly, the time required to heat the glue gun to the proper operating temperature is increased.

The use of EnBA copolymers in hot-melt applications is mentioned in several references. For example, "EnBA Resins Give Hot Melts More Heat and Oil Resistance" by D. Wielinski (Adhesives Age, November, 1989, p. 30, et. seq.) notes that n-butyl acrylate may be substituted for vinyl acetate in an ethylene/vinyl acetate composition with consequential improvement in certain resin properties such as enhanced low temperature flexibility, oil resistance and heat stability. It is stated that n-butyl acrylate, as compared to vinyl acetate, can be employed at higher application temperatures, and has broader compatibility with a variety of tackifiers and waxes.

The article only discusses EnBA copolymers having a melt index of 400 or less. There is no indication that EnBA copolymers with a melt index in excess of 400 would be useful. Higher melt index copolymers, relative to those with a lower melt index, are capable of being applied at a lower temperature. As discussed above, certain advantages may be realized when the hot-melt composition can be applied at lower temperatures. Furthermore, higher melt index copolymers tend to be less viscous at a given temperature and, as a result, flow more easily and provide better substrate wetting. In general, these compositions are easier and safer to use.

U.S. Pat. No. 4,816,306 and its division U.S. Pat. No. 4,874,804, "Hot Melt Adhesive Based on Ethylene-N-Butyl Acrylate," each to Brady et al., disclose hot-melt adhesives based on EnBA copolymers. These patents disclose that hot-melt compositions consisting essentially of 35% to 45% by weight of an EnBA copolymer, 35% to 55% of a terpene phenolic tackifier, and 10% to 20% by weight of a high melting synthetic wax are especially useful in high speed, rapid-fire automated cardboard case and carton sealing equipment. The adhesive compositions were applied as a bead at 175°C and subsequently compressed during assembly of the cardboard cartons.

U.S. Pat. No. 3,615,106, "Manufacture of Hard Covered Books," issued October 26, 1971 to Flanagan et al., discloses a hot-melt adhesive composition comprising 38% EnBA, 20% paraffin wax, 35% tackifying resin, and 7% polyethylene. The composition is useful in producing hard bound books. Preferably the EnBA has a melt index in the range of from about 1.0 to 20.0. The compositions are applied at temperatures of from about 300° to 400°F to provide 5 to 30 mil thick wet coatings.

Thus, there is a need for a hot-melt composition which, when spread in a thin layer, has a limited open time of at least 5 seconds. Compositions with an open time of at least 5 seconds are needed when bonding large surface area substrates and precision components. However, the open time of such compositions should be limited. That is, they should not have a virtually infinite open time as do pressure sensitive adhesives so as to reduce the likelihood of dirt contamination on the edges of a substrate and the deterioration of bond strength which can occur if dirt contaminates the tacky substrate before bonding.

It would also be advantageous if such compositions were creep-resistant, especially if used to bond precision components.

Several other characteristics would further contribute to the desirability of the hot-melt compositions. For example, it would be preferred if bonds could be formed without applying more than hand pressure or without supplying more heat than is generated by the application of hand pressure. A composition having such bond formation characteristics would be remarkably easy to use. Large, cumbersome heated presses would not be required to assemble components.

Presently known hot-melt compositions based on EnBA copolymers do not demonstrate both a limited open time of at least 5 seconds and creep resistance when deposited as thin films on unheated (i.e., room temperature) substrates. Moreover, those compositions which are presently known do not exhibit these characteristics in combination with the ability to form bonds without applying heat or more than hand pressure.

European Patent Publication No. 0,340,990, assigned to the assignee of the instant application, discloses a hot-melt composition comprising an ethylene/vinyl acetate copolymer and a tackifying resin. When deposited as a thin film about 50 μ (microns) thick on a room temperature substrate, the composition has an open time of at least 5 seconds and then forms a creep-resistant bond without applying more than hand pressure. Although these compositions offer some extraordinary properties, compositions based on EnBA copolymers may exhibit different properties not available with ethylene/vinyl acetate copolymers. Such different properties include better bond strength at elevated temperatures, better overall performance at higher temperatures, enhanced mechanical flexibility of bonds made therewith, and more aggressive tack.

## SUMMARY OF THE INVENTION

The invention provides a hot-melt composition that can be deposited onto an unheated (i.e., approximately room temperature) substrate to form a thin layer about 50 to 250 μ thick. The composition has a limited open time of at least 5 seconds at room temperature (approximately 20° to 22°C) and then forms a creep-resistant bond without applying heat or more than hand pressure.

More particularly, hot-melt compositions according to the invention consist essentially of an ethylene/n-butyl acrylate (EnBA) copolymer having a melt index greater than 400 and a tackifying resin. Preferably, the EnBA copolymer comprises from about 25 % to 40 % by weight n-butyl acrylate and, more preferably, from about 30 % to about 38 % by weight n-butyl acrylate.

The tackifying resin may be selected from the group consisting of polyterpene resins, hydrogenated wood rosins, hydrogenated hydrocarbons, aromatic hydrocarbons and the like as well as blends thereof. The tackifying resin comprises from about 50 to 180 parts per 100 parts by weight of the EnBA copolymer, more preferably, from about 120 to 170 parts. Preferably, the tackifying resin has a ring and ball softening point from about 85°C to 135°C and a combined aromatic and olefinic content from about 0.5 to 50 mole %.

Advantageously, EnBA-based adhesive compositions according to the invention tolerate the addition of small amounts of wax which may be desirable in certain applications. Adhesives of the invention may comprise up to about 5 parts wax per 100 parts combined weight of the copolymer and the tackifying resin while still having a limited open time of at least 5 seconds followed by the formation of a creep-resistant bond without applying heat or more than hand pressure.

## BRIEF DESCRIPTION OF THE DRAWING

The invention will be more fully understood with reference to the following drawing in which:

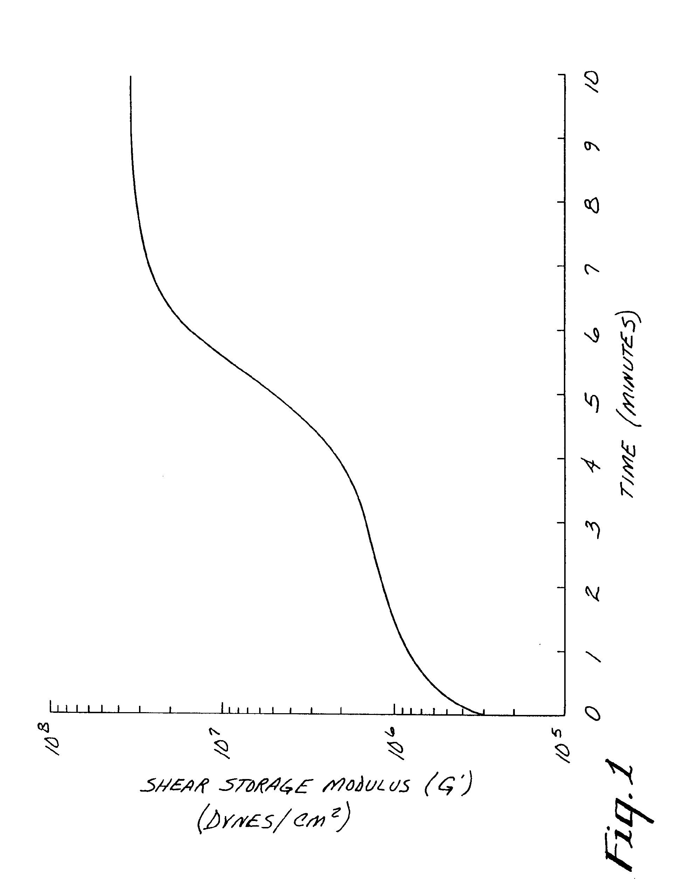

FIG. 1 is a graphical representation of shear storage modulus vs. time for a hot-melt composition according to the invention.

## DETAILED DESCRIPTION OF THE PREFERRED EMBODIMENTS

This invention relates to hot-melt compositions based on ethylene/n-butyl acrylate (EnBA) copolymers and tackifying resins. In a preferred form, compositions according to the invention are employed as hot-melt adhesives. Although the following description focuses on the use of the compositions as hot-melt adhesives, it will be understood that they may also be useful as hot-melt coatings and sealants.

Hot-melt compositions according to the invention exhibit a combination of desirable properties not heretofore found in a single EnBA-based hot-melt composition. Compositions according to the invention have a limited open time or tack bonding range (time during which the compositions remain tacky at room temperature, about 20° to 22°C). That is, compositions according to the invention have open times which exceed 5 seconds without being virtually infinite. Thus, compositions according to the invention display a tack bonding range which provides ample time for bonding large surface area substrates and precision components while minimizing the deleterious effects of dirt intrusion and other problems, as described more fully hereinabove.

The novel compositions described herein ultimately crystallize to form creep-resistant bonds (i.e., stable, failure-resistant bonds). Bonds made with compositions according to the invention may be formed without applying more than hand pressure or more heat than results from the application of hand pressure. Surprisingly, these features are attained even when the compositions are spread as thin films (about 50 to 250 μ thick) onto unheated (i.e., room temperature) substrates, much to the contrary of presently known hot-melt compositions.

In addition to all of these advantages, compositions according to the invention can be applied with conventional applicators but at relatively low temperatures of about 260°F (127°C) or less, whereas most presently known hot-melt compositions have application temperatures in the range of about 350° to 400°F (177° to 204°C). Thus, hot-melt compositions according to the invention, as opposed to most of those which are presently known, are less likely to burn a user and can be employed with heat sensitive substrates.

The EnBA copolymer preferably has a melt index greater than 400, more preferably about 750. If the melt index is less than 400, hot-melt compositions made therefrom may be too viscous to be readily extruded or coated onto a substrate using conventional hot-melt composition dispensers at application temperatures of about 260°F (127°C) or less. It is believed that there is no effective upper limit on the melt index of EnBA copolymers which may be used according to the invention, although the use of higher melt index copolymers may be practically limited by factors such as cost and commercial availability.

The n-butyl acrylate (BA) content of the EnBA copolymer should be from about 25% to 40%, more preferably from about 30% to 38%. At a BA content substantially greater than about 40%, the compositions may be too soft and amorphous and may lose their capacity to form strong, creep-resistant bonds. However, if the BA content is substantially less than about 25%, the hot-melt compositions may not be sufficiently tacky (i.e., the open time becomes too short) when spread as a thin layer.

The EnBA copolymers may include small amounts of other materials such as stabilizers, antioxidants, melt- index modifiers (e.g., isobutylene and propylene), and various reactive monomers such as acrylic acid and methacrylic acid which may be useful in modifying the physical properties of the copolymers. Preferably, these "other materials" comprise less than 10% by weight of the copolymer. Representative examples of useful EnBA copolymers include:

| No. | Trade Designation | Source | Nominal % BA[+] | Nominal Melt Index[+] |
|---|---|---|---|---|
| A | E-61382-48 | E.I. duPont* | 30 | 750 |
| B | E-63952-100B | E.I. duPont | 25 | 750 |
| C | E-63952-100C | E.I. duPont | 35 | 750 |
| D | E-63952-100D | E.I. duPont | 40 | 750 |

+ As reported by the manufacturer or supplier.
* E.I. duPont de Nemours & Co.

Each EnBA copolymer, as commercially available, includes small amounts (about 1% to 2%) of methacrylic acid. Acid modified (for example, using methacrylic acid) copolymers are especially useful when enhanced heat resistance and elevated temperature strength are desired and are particularly well suited for use with low melting point tackifying resins. However, copolymers which are not acid modified may also be used.

A wide variety of tackifying resins (sometimes referred to herein as tackifiers) may be used in accordance with the invention. Representative tackifiers and/or tackifiers used to prepare the following examples, are tabulated below.

| No. | Trade Designation | Source | Arom. /olef. cont. (mole%) | Nom. Soft. Point (°C) | Description |
|---|---|---|---|---|---|
| A | CLEARON P-85 | Yashuhara Yushi* | 2.8 | 85 | hydrog. polyterpene |
| B | CLEARON P-105 | Yashuhara Yushi | 2.8 | 105 | hydrog. polyterpene |
| C | CLEARON P-115 | Yashuhara Yushi | 2.8 | 115 | hydrog. polyterpene |
| D | CLEARON P-125 | Yashuhara Yushi | 2.8 | 125 | hydrog. polyterpene |
| E | KRISTALEX 3085 | Hercules Inc. | 68.1 | 85 | methyl-styrene |
| F | HERCOTAC LA 95 | Hercules Inc. | 42.9 | 93 | arom. hydrocarbon |
| G | PICCOLYTE HM90 | Hercules Inc. | 25.0 | 90 | arom. mod. terpene |
| H | FORAL 85 | Hercules Inc. | 6.1 | 85 | hydrog. rosin ester |
| I | REGALITE M-355 | Hercules Inc. | 7.4 | 85 | hydrog. wood rosin |
| J | REGALITE 7070 | Hercules Inc. | 10.7 | 70 | arom. hydrocarbon |
| K | REGALREZ 1094 | Hercules Inc. | 0 | 94 | hydrog. hydrocarbon |
| L | ARKON M135 | Arakawa | 20. | 135 | hydrog. hydrocarbon |

*Yashuhara Yushi Kogyo Co., Ltd.

The saturated aliphatic content of each tackifying resin is the difference between 100% and the aromatic/olefinic content ("Arom/olef. cont.") given above.

To provide the above-described extraordinary combination of protracted aggressive tackiness at room temperature and creep-resistant bonding, it is believed that there must be some compatibility between the tackifying resin and the ethylene and n-butyl acrylate moieties of the EnBA copolymer. Preferred compatibility between the tackifying resin and the ethylene moiety of the EnBA copolymer should be realized when the tackifying resin has a combined aromatic and olefinic content of at least 0.5 mole % as determined by carbon-13 NMR analysis (nuclear magnetic resonance spectroscopy, also known as magnetic resonance imaging). However, when the aromatic/olefinic content exceeds about 50 mole %, the tackifying resin may not be sufficiently compatible with the n-butyl acrylate moiety of the EnBA copolymer. Enhanced compatibility also improves clarity of the adhesive for aesthetic purposes and, when clarity is important, no more than 50 mole % of the saturated aliphatic content of the tackifying resin should be cycloaliphatic. The aromatic/olefinic content may be determined by analytical techniques other than carbon-13 NMR, although it is expected that the results from different approaches will be consistent.

The nominal ring and ball softening point ("Nom. Soft. Point") (as determined by ASTM test method E-28) of the tackifying resin preferably is no less than about 85°C, more preferably from about 85° to 135°C, and most preferably from about 90° to 125°C.

Preferred tackifying resins include polyterpene resins, hydrogenated wood rosins, and derivatives thereof such as a water-white hydrogenated polyterpene resins having ring and ball softening points between about 85°C and 135°C and called CLEARON by Yashuhara Yushi Kogyo Co., Ltd. and PICCOLYTE HM90 from Hercules, Inc.

The various tackifying resins may be combined with the EnBA copolymers in a ratio of about 50 to about 180 parts by weight resin to 100 parts by weight copolymer. Preferably there are from about 120 to about 170 parts by weight of the tackifying resin per 100 parts by weight of the EnBA copolymer. Above 170 parts, bonds made with the novel hot-melt compositions may afford less resistance to impact, while below 120 parts deposited layers of the composition may be less tacky.

In addition to an EnBA copolymer and a tackifying resin, hot-melt compositions according to the invention may also comprise small amounts of other additives that have customarily been used in hot-melt formulations such as antioxidants, stabilizers, ultraviolet absorbers, pigments, fillers, viscosity reducers (for example, plasticizers and the like), polymeric bubbles, polymeric hollow microspheres, glass bubbles or beads, ceramic bubbles, and metal-coated ceramic or glass bubbles. These additives should only be present in an amount that does not materially adversely affect the tack bonding range, ultimate bond strength, or heat resistance of the composition. Typically the total amount of such additives does not exceed about 25% by weight of the hot-melt composition.

Hot-melt compositions according to the invention may be prepared by mixing the components thereof at a temperature somewhat above their softening points under an inert atmosphere blanket. The resulting hot-melt compositions may be converted into rods, cylinders, slugs, billets or pellets and dispensed directly from known melt reservoir bulk hot-melt applicators or pail unloaders. They may also be sprayed or blown to form webs. Alternatively, they may be coated or extruded onto release liners to form reactivatable films.

Preferably, the hot-melt compositions are provided as sticks or rods that may be mechanically or pneumatically supplied to the heated well or chamber of a "glue gun" type dispenser such as those illustrated in U.S. Pat. Nos. 4,621,748 and 4,457,457, each to Dziki. Compositions according to the invention which are too soft to be readily formed into a stick or rod that can be supplied to a "glue gun" may still be dispensed therefrom by using a cartridge containing the composition, as will be understood by those skilled in the art, more preferably 50 to 125 μ.

Preferably, the hot-melt compositions are applied to a substrate in a thin (about 50 to 250 μ, more preferably, 50 to 125 μ) layer at a temperature of about 260°F (127°C) or less although temperatures in excess of this may be required depending on the physical characteristics of the particular hot-melt composition. (These temperatures do not refer to the actual temperature of the dispensed adhesive, but rather to the thermostat temperature of the hot-melt "glue gun" applicator.) Once the composition has been applied to the substrate, the substrate is mated with a second surface while the adhesive remains tacky. The substrate and the second surface can be successfully mated by applying no more than hand pressure or no more heat than results from the application of hand pressure (sometimes referred to herein as applying "hand pressure'") to form a creep-resistant bond.

Heat which is necessary to form the bond between the substrate and the second surface is to be distinguished from the heat which is necessary to apply or activate the hot-melt composition in the first instance. The hot-melt compositions of the invention, like those which are presently known, are provided as solid materials which must be heated to melt and activate them ("the heat of activation") so that they can be supplied as viscous liquids to a substrate. This heat is typically provided by a hot-melt applicator such as a "glue gun."

Advantageously, however, once the hot-melt compositions of the invention are applied to an unheated (room temperature) substrate, a bond may be formed with a second surface merely by applying hand pressure. Other hot-melt compositions which are presently known, require the application of substantial heat and/or pressure to form a bond once the composition has been deposited on a substrate.

Hot-melt compositions according to the invention may also be formulated as sticks which can be applied by hand. The sticks themselves are nontacky but when rubbed against an unheated substrate deposit a thin layer of adhesive which has an open time of at least 5 seconds. The heat of activation is generated by the friction which results from rubbing the stick against the substrate. A subsequent bond to a second surface may be made merely by applying hand pressure. Such bonds have sufficient strength to tear paper. Because these hand sticks require a relatively small amount of heat to activate the hot-melt composition, the thin layer of deposited adhesive may be readily reactivated. That is, once the adhesive has been deposited onto a substrate it becomes nontacky once its open time is exceeded. However, such adhesives can be readily restored to a tacky state by merely rubbing the deposited layer. Once the adhesive has been returned to a tacky condition, a bond to a second surface may be made in the usual manner as described herein.

The inventive compositions may also be applied as nontacky coatings for a substrate. If, after application to a substrate, the coating becomes nontacky, it can be subsequently reactivated by heating or rubbing, either before or after being contacted with a material to be bonded thereto. Hot-melt compositions which behave in this manner are especially useful in preparing large surface area panels for intermediate storage before ultimate assembly, such as described hereinabove with regard to advertising displays and the like.

Hot-melt compositions according to the invention exhibit a tack bonding range of at least 5 seconds when deposited as an approximately 50 to 250 $\mu$ thick layer on an unheated substrate. However, the hot-melt compositions do not have a virtually infinite open time as do pressure sensitive adhesives. Thus, hot-melt compositions according to the invention may be regarded as having a limited open time of at least 5 seconds.

Tack bonding range was determined by depositing an approximately 100 $\mu$ thick, 1.9 centimeter (cm) wide layer of the hot-melt composition at about 260°F (127°C) (thermostat temperature) onto ordinary white, 20 lb. bond typing paper otherwise maintained at room temperature (about 20° to 22°C). (Layer thickness varied somewhat due to slight differences in application technique.) A second sheet of the same paper was placed over the deposited layer and a 2.2 kilogram (kg) roller was passed over the sheets once at a speed of about 7.5 cm/second. The bonded sheets were immediately subjected to a 180° peel at a separation rate of 30 cm/minute. Paper delamination or tearing occurred at approximately 12 newtons. The maximum time between depositing the layer and passing the roller that results in tearing of the paper is the open time or tack bonding range of the composition. Thus, the tack bonding range is a measure of the time during which the adhesive remains tacky after having been applied to a room temperature substrate.

Bonds formed with hot-melt compositions according to the invention ultimately crystallize and become creep-resistant. Creep refers to the dimensional change a material undergoes as a function of time when the material is under a sustained load. (A material which creeps moves slowly under stress.) An article bonded to a substrate by a creep-resistant adhesive will remain in place and will not move or slip, a particularly important attribute for bonding precision components. Creep-resistance is measured by ASTM Test Method D3654 except that the adhesive is deposited as an approximately 100 $\mu$ thick layer onto polyester film from a hot-melt adhesive dispenser and the mass suspended from the film is 1 kg. (Layer thickness varied somewhat due to slight differences in application technique.) The test is sometimes discontinued after 10,000 minutes if no failure occurs. A creep resistant bond will not fail at 1,000 minutes and preferably will not fail at 10,000 minutes.

The tackiness and creep-resistance of hot-melt compositions according to the invention may also be assessed with reference to the shear storage modulus (G') (compression modulus) of the composition. Shear storage modulus is the ratio of stress to strain for the composition. A layer of adhesive about 50 $\mu$ thick is sufficiently tacky to form bonds under ordinary hand pressure at room temperature when its shear storage modulus is less than $1 \times 10^6$ dynes/cm$^2$ and can do so more easily when its shear storage modulus is less than $7 \times 10^5$ dynes/cm$^2$. After the shear storage modulus of the adhesive layer has increased above $5 \times 10^6$ dynes/cm$^2$, a bond which was made when the adhesive was tacky may be creep-resistant. To assure good creep resistance, the ultimate shear storage modulus should be at least $1 \times 10^7$ dynes/cm$^2$. For a discussion of shear storage modulus see Satas, Handbook of Pressure-Sensitive Adhesive Technology, Van Nostrand Reinhold Co., New York, 1982, pp. 82-83.

The invention will be more fully appreciated with reference to the following illustrative and nonlimiting examples which are intended to set forth the unique characteristics of the hot-melt compositions. In the examples all parts (amounts) are by weight unless specified otherwise.

**General Preparation**

Various hot-melt compositions were prepared for the following examples. In general, an EnBA copolymer and a tackifying resin were heated under a nitrogen blanket to about 149°C with hand mixing. After about 5 minutes at this temperature, the melt was poured into a mold and allowed to cool to provide a toothed rod of adhesive as illustrated in U.S. Pat. No. 4,621,748 (Dizki). Various examples were tested for tack bonding range and creep resistance according to the procedures described above. The compositions of the examples were deposited onto substrates using conventional, commercially available hot-melt applicators.

**Examples 1-6**

A series of toothed rods was made as described in the general preparation. In each example, 100 parts of an EnBA copolymer were blended with 150 parts of a tackifying resin. The EnBA copolymer and the tackifying resin were varied as shown below in Table I.

**Table I**

| Example No. | EnBA Copolymer No. | Tackifying Resin No. | Nom. Soft. Point (°C) | Tack Bonding Range (Sec.) | Creep Resistance (Min.) |
|---|---|---|---|---|---|
| 1 | A | A | 85 | 35 | >10,000 |
| 2 | A | B | 105 | 40 | >10,000 |
| 3 | A | C | 115 | 45 | >10,000 |
| 4 | A | D | 125 | 45 | >10,000 |
| 5 | C | C | 115 | 80 | * |
| 6 | C | L | 135 | 25 | >10,000 |

NT = Not tested

*Analogous testing shown in FIG. 1.

Table I shows that EnBA copolymers may be blended with tackifying resins having softening points in the range of about 85°C to 135°C. In example 6, the EnBA copolymer had a larger percentage of n-butyl acrylate (35%) as compared to examples 1-4 (25%) so as to form a useful blend with the higher softening point resin. More preferably, the softening point range for the tackifying resins is from about 90°C to about 125°C.

The tackiness and creep resistance of the hot-melt composition of example 5 is further shown in FIG. 1, a graphical plot of shear storage modulus (G') in dynes/cm$^2$ v. time in minutes. FIG. 1 shows that when a thin (50 $\mu$) layer of the adhesive of example 5 was spread onto an unheated substrate, it had an initial shear storage modulus of 3 x 10$^5$ dynes/cm$^2$. Even after about 90 seconds, the shear storage modulus did not exceed about 1 x 10$^6$ dynes/cm$^2$. As noted above, a layer of adhesive about 50 $\mu$ thick is sufficiently tacky to form bonds under hand pressure at room temperature when its shear storage modulus is less than 1 x 10$^6$ dynes/cm$^2$ (preferably, less than 7 x 10$^5$ dynes/cm$^2$). As noted above, a layer of adhesive about 50 $\mu$ thick is sufficiently tacky to form bonds under hand pressure at room temperature when its shear storage modulus is less than 1 x 10$^6$ dynes/cm$^2$ (preferably, less than 7 x 10$^5$ dynes/cm$^2$). Once the shear storage modulus of the adhesive increases to about

$5 \times 10^6$ dynes/cm$^2$, a bond made when the adhesive was tacky may be creep-resistant. Preferably, the ultimate shear storage modulus is at least $1 \times 10^7$ dynes/cm$^2$.

The hot-melt composition of example 1 was also formulated into a non-tacky stick, which, when rubbed against a piece of ordinary typing paper, deposited a thin layer of adhesive which had an open time of about 5 seconds. When a second piece of the same kind of paper was bonded to the adhesive, the resulting bond was sufficiently strong to tear the paper.

**Examples 7-13**

A series of hot-melt compositions was prepared as described under the general preparation using 150 parts of various tackifying resins with 100 parts of EnBA copolymer A as indicated below in Table II. With reference to the tack bonding range, Table II shows the benefit of using a tackifying resin that has an aromatic/olefinic content between about 0.5 and 50 mole %.

**Table II**

| Example No. | Tackifying Resin No. | Arom/olef. content (mole %) | Tack Bonding Range (Sec.) | Creep Resistance (Min.) |
|---|---|---|---|---|
| 7 | K | 0 | 2 | NT |
| 1 | A | 2.8 | 35 | >10,000 |
| 8 | H | 6.1 | 35 | >10,000 |
| 9 | I | 7.4 | 25 | >10,000 |
| 10 | J | 10.7 | 85 | >10,000 |
| 11 | G | 25.0 | 20 | >10,000 |
| 12 | F | 42.9 | 15 | >10,000 |
| 13 | E | 68.1 | 2 | NT |

NT = Not tested

**Examples 14-23**

A series of hot-melt compositions was prepared as described under the general preparation using 100 parts EnBA copolymer A and tackify resin C, the amount (parts) of tackifying resin C being varied as indicated below in Table III.

## Table III

| Example No. | Amount of Tackifying Resin | Tack Bonding Range (Sec.) | Creep Resistance (Min.) |
|---|---|---|---|
| 14 | 50 | 10 | >10,000 |
| 15 | 100 | 20 | NT |
| 16 | 120 | 30 | NT |
| 17 | 130 | 35 | NT |
| 18 | 140 | 35 | NT |
| 3 | 150 | 45 | >10,000 |
| 19 | 160 | 45 | NT |
| 20 | 170 | 30 | NT |
| 21 | 180 | 5 | >10,000 |
| 22 | 200 | 3 | NT |
| 23 | 300 | 0 | NT |

NT = Not tested

Table III shows the effect of varying the amount of tackifying resin in the hot-melt composition and indicates that about 50 to 180 parts (preferably about 120 to 170 parts) of tackifying resin per 100 parts EnBA copolymer provides a tack bonding range of at least about 5 seconds. At greater amounts of tackifying resin, the hot-melt formulations become more brittle and have reduced tack. Adhesives compositions having 50, 150 and 180 parts resin had a creep resistance greater than 10,000 minutes. Examples 15-18, 19 and 20 were not tested for creep resistance because examples having less tackifying resin (example 14) and more tackifying resin (example 21) than these examples performed satisfactorily.

**Examples 24-28**

A series of hot-melt compositions was prepared as described in the general preparation. The EnBA copolymers were selected to show the effect on the tack bonding range of varying the proportion of n-butyl acrylate (BA) in the EnBA copolymer. In each example, 150 parts of a tackifying resin was blended with 100 parts of the specified EnBA copolymer. The results are shown below in Table IV.

**Table IV**

| Example No. | EnBA Copolymer | | Tackifying Resin | | Tack Bonding Range (Sec.) | Creep Resistance (Min.) |
|---|---|---|---|---|---|---|
| | No. | % BA | No. | Amount | | |
| 24 | B | 25 | A | 150 | 10 | >10,000 |
| 1 | A | 30 | A | 150 | 35 | >10,000 |
| 25 | C | 35 | A | 150 | 120 | >10,000 |
| 26 | D | 40 | A | 150 | 370 | >10,000 |
| 2 | A | 30 | B | 150 | 40 | >10,000 |
| 27 | C | 35 | B | 150 | 210 | NT |
| 28 | D | 40 | B | 150 | 130 | NT |

NT = Not tested

Table IV illustrates that the tack bonding range of the hot-melt composition generally increases as the % BA in the EnBA copolymer increases. However, as the softening point of the tackifying resin increases from 85°C to 105°C (resin A vs. resin B), the compositions are less able to tolerate relatively large amounts of n-butyl acrylate. Those compositions which were tested had a creep resistance which exceeded 10,000 minutes.

**Examples 29-32**

A series of hot-melt compositions was prepared according to the general preparation except that small amounts of wax (as measured in parts per 100 parts combined weight of the EnBA copolymer and the tackifying resin) were blended with the EnBA/tackifying resin compositions. The EnBA copolymer was varied as shown in Table V. 150 parts of tackifying resin A per 100 parts EnBA were used in all examples. The wax in all examples was PARAFLINT H-1 commercially available from Moore and Munger Marketing, Inc. The results are shown below in Table V.

## Table V

| Example No. | EnBA Copolymer No. | Wax Amount | Tack Bonding Range (Sec.) | Creep Resistance (Min.) |
|---|---|---|---|---|
| 25 | C | 0 | 120 | >10,000 |
| 29 | C | 5 | 20 | >10,000 |
| 30 | C | 10 | 1 | NT |
| 26 | D | 0 | 370 | >10,000 |
| 31 | D | 5 | 20 | >10,000 |
| 32 | D | 10 | 1 | NT |

NT = Not tested

Table V illustrates that up to about 5 parts wax per 100 parts combined EnBA and tackifying resin weight can be added to hot-melt compositions according to the invention. While formulations which include up to about 5 parts wax have a shortened tack bonding range relative to those formulations which do not include wax, the tack bonding range still exceeds 5 seconds and the formulations are useful in accordance with the invention. Those formulations which were tested had a creep resistance which exceeded 10,000 minutes.

In some applications it is desirable to add small amounts of wax, for example, to improve the heat resistance of the composition or to lower viscosity. However, it is generally understood that waxes will decrease the tack bonding range. With the EnBA/tackifying resin blends of the invention, small amounts of wax can be added while still maintaining a tack bonding range of at least 5 seconds. Waxes suitable for use in the adhesive compositions of the invention include, for example, those which may be characterized as high melting (above 100°C) synthetic waxes such as synthetic, high density, low molecular weight polyethylene waxes or "Fischer-Tropsch" waxes.

Reasonable variations or modifications are possible within the foregoing specification and drawing without departing from the scope of the invention which is defined in the accompanying claims.

## Claims

1. A hot-melt composition consisting essentially of an ethylene/n-butyl acrylate copolymer having a melt index greater than 400 and a tackifying resin, wherein said composition has a limited open time of at least 5 seconds when deposited in a thin layer on a room temperature substrate.

2. A hot-melt composition according to claim 1 wherein said ethylene/n-butyl acrylate copolymer comprises from about 25 % to 40 % by weight n-butyl acrylate.

3. A hot-melt composition according to claim 1 wherein said tackifying resin comprises from about 50 to 180 parts per 100 parts by weight of said ethylene/n-butyl acrylate copolymer.

4. A hot-melt composition according to claim 1 wherein said tackifying resin has a nominal ring and ball softening point of about 85° to 135°C.

5. A hot-melt composition according to claim 7 wherein said tackifying resin has a combined aromatic and olefinic content of about 0.5 to 50 mole %.

6. A hot-melt composition according to any preceding claim wherein the composition has a creep resistance of at least 1,000 minutes.

7. A hot-melt composition according to any preceding claim wherein the composition has a shear storage modulus of less than $10^6$ dynes/cm$^2$ for at least 5 seconds after having been deposited onto the room temperature substrate, and further wherein the ultimate shear storage modulus of the composition is at least $5 \times 10^6$ dynes/cm$^2$.

8. A hot-melt composition according to claim 1 wherein said layer has a thickness of about 50 to 250 microns.

9. A hot-melt adhesive composition according to any preceding claim wherein the hot-melt composition comprises a rod of adhesive.

10. An article comprising a substrate having a layer of a hot-melt composition according to any preceding claim thereon.

Fig. 1

| | European Patent Office | EUROPEAN SEARCH REPORT | Application Number |
|---|---|---|---|
| | | | EP 92 31 0915 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | EP-A-0 300 158 (NATIONAL STARCH AND CHEMICAL) <br> * page 2, line 36 - line 49 * <br> --- | 1-10 | C09J123/08 |
| A | DE-A-2 523 617 (BASF) <br> * page 2, paragraph 2 -last paragraph * <br> * examples 4,7 * <br> --- | 1-10 | |
| A | WO-A-8 501 052 (DOW CHEMICAL) <br> * page 3, line 27 - page 4, line 19 * <br> * page 5, line 11 - line 18 * <br> ----- | 1-10 | |
| | | | **TECHNICAL FIELDS SEARCHED (Int. Cl.5 )** |
| | | | C09J |

| | | |
|---|---|---|
| The present search report has been drawn up for all claims | | |
| **Place of search** <br> THE HAGUE | **Date of completion of the search** <br> 03 MARCH 1993 | **Examiner** <br> SCHMIDT H.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P0401)